# EUROPÄISCHE PATENTSCHRIFT

(11) **EP 4 357 866 B1**
(45) Veröffentlichungstag und Bekanntmachung des Hinweises auf die Patenterteilung: **12.08.2026**
(21) Anmeldenummer: 23200715.3
(22) Anmeldetag: 29.09.2023
(51) Int. Cl.: G05B 23/02

(54) **VERFAHREN ZUR FEHLERERKENNUNG IN EINEM MASCHINELLEN SYSTEM**
METHOD FOR DETECTING ERRORS IN A MACHINE SYSTEM
PROCÉDÉ DE DÉTECTION DE DÉFAUTS DANS UN SYSTÈME MÉCANIQUE

(30) Priorität: 20.10.2022 DE 102022211094
(43) Veröffentlichungstag der Anmeldung: 24.04.2024
(73) Patentinhaber: Robert Bosch GmbH, 70442 Stuttgart (DE)
(72) Erfinder: Sendelbach, Thomas, 97816 Lohr (DE); Reimer, Manuel, 97854 Steinfeld (DE)

(56) Entgegenhaltungen:
- EP-B1- 1 085 416
- US-A1- 2020 051 419
- MOCHNAC J ET AL: "Bayesian filtering techniques: Kalman and extended Kalman filter basics", RADIOELEKTRONIKA, 2009. RADIOELEKTRONIKA '09. 19TH INTERNATIONAL CONFERENCE, IEEE, PISCATAWAY, NJ, USA, 22 April 2009 (2009-04-22), pages 119 - 122, XP031485829, ISBN: 978-1-4244-3537-1

## Beschreibung

Die vorliegende Erfindung betrifft ein Verfahren zur Fehlererkennung in einem maschinellen System sowie eine Recheneinheit und ein Computerprogramm zu dessen Ausführung.

### Hintergrund der Erfindung

Im Bereich industrieller Maschinen, z.B. hydraulisch angetriebener Maschinen, kann im Rahmen einer vorausschauenden Instandhaltung eine Fehler- bzw. Anomalieerkennung eingesetzt werden, um Fehler frühzeitig, vor einem Ausfall und Stillstand der jeweiligen Maschine zu erkennen. Dazu können insbesondere auf maschinellem Lernen basierende Modelle, z.B. neuronale Netze oder Ähnliches, verwendet werden, die Sensormesswerte als Eingabe erhalten. Die Software, welche diese Modelle implementiert, kann in einem von der jeweiligen Maschine entfernten Computersystem, z.B. sogenannten Cloud- oder Edge-Servern, ausgeführt werden, wobei Messdaten während des Betriebs der Maschine von dieser zum entfernten Computersystem über ein Netzwerk übertragen werden.

EP 1 085 416 B1 betrifft ein auf qualitativen und quantitativen Verfahren basierendes hybrides Diagnoseschema, mit dem Statusinformationen über eine Maschine, wie z. B. ein elektronisches Gerät, erhalten werden können. US 2020/051 419 A1 betrifft Systeme und Verfahren zur Erkennung, Isolierung und Diagnose von Maschinenfehlern. Mochnac J., et al., Bayesian filtering techniques: Kalman and extended Kalman filter basics, Radioelektronika, 2009. RADIOELEKTRONIKA '09. 19th International Conference, IEEE, Piscataway, NJ, USA, 22 April 2009, Seiten 119-122, ISBN 978-1-4244-3537-1 beschreibt Kalmanfilter zur Schätzung des Zustands eines Systems.

### Offenbarung der Erfindung

Erfindungsgemäß werden ein Verfahren zur Fehlererkennung in einem maschinellen System, das ein hydraulisch angetriebenes System einschließt, sowie eine Recheneinheit und ein Computerprogramm mit den Merkmalen der unabhängigen Patentansprüche vorgeschlagen. Vorteilhafte Ausgestaltungen sind Gegenstand der Unteransprüche sowie der nachfolgenden Beschreibung.

Im Rahmen der Erfindung können physikalische Modelle zusammen mit Sensorik und Methoden für virtuelle Sensorik (Beobachter) kombiniert werden, um mechanische, elektrische bzw. hydraulische Fehler oder Verschleiß aufwandsarm zu erkennen. Die Erfassung von Mustern von verschiedenen Verschleißparametern kann dann über die Zeit dazu beitragen, eine Ausfallwahrscheinlichkeit bzw. einen Ausfallgrund noch genauer zu bestimmen. Beispielsweise kann zwischen Verschleißparametern eine multivariate Abweichungserkennung auf Basis von Distanz- bzw. Abstandmaßen, wie z.B. einer Mahalanobis-Distanz, ermittelt werden. Die Erfindung lässt sich aufwandsarm implementieren und kann auch in lokalen Recheneinheiten vor Ort, beispielsweise in einem Steuergerät wie einer SPS, implementiert werden.

Im Einzelnen wird für ein maschinelles System, das ein hydraulisch angetriebenes System einschließt, unter Verwendung erfasster Messwerte für eine oder mehrere Messgrößen ein iteratives Schätzverfahren zur Schätzung eines Systemzustands durchgeführt, der wenigstens eine unbeobachtete Größe einschließt, wobei das iterative Schätzverfahren auf einem physikalischen Modell basiert, das eine Wechselwirkung der wenigstens einen unbeobachteten Größe mit der bzw. den Messgrößen einschließt. Es wird eine Anomalieerkennung angewendet, um einen Fehler des Systems festzustellen, wenn eine Anomalie der wenigstens einen unbeobachteten Größe erkannt wird. Dieses Vorgehen ist vorteilhaft, da bei geeigneter Wahl der unbeobachteten Größe diese ein Element des Systems betreffen kann, bei dem Fehler oder Schäden auftreten können, die von außen nicht sichtbar oder nicht direkt messbar sind. Fehler solcher Elemente können somit frühzeitig, vor einem Ausfall des maschinellen Systems durch die Anomalie in der unbeobachteten Größe erkannt werden. Weiter ist relativ wenig Rechenaufwand notwendig; z.B. müssen keine rechenintensiven, auf maschinellem Lernen basierenden Modelle implementiert werden.

Der Begriff "unbeobachtete Größe" soll insbesondere eine Größe bezeichnen, die im normalen bzw. regulären Betrieb des maschinellen Systems nicht gemessen wird. D.h., es sind zwar prinzipiell Messverfahren denkbar, um unbeobachtete Größen zu bestimmen, diese sind jedoch im normalen Betrieb des Systems nicht einsetzbar. Beispielsweise gibt es keine Sensoren, mit denen eine unbeobachtete Größe gemessen bzw. erfasst werden kann. Entsprechend werden auch die Begriffe "unbeobachtbare Größe" oder "nicht-messbare Größe", jeweils zu verstehen als "im regulären Betrieb unbeobachtete Größe" bzw. "im regulären Betrieb nichtgemessene Größe", verwendet.

Da der Systemzustand die wenigstens eine unbeobachtete Größe einschließt, wird im iterativen Schätzverfahren eine Schätzung für die wenigstens eine unbeobachtete Größe bestimmt. Die Anomalieerkennung erkennt entsprechend die Anomalie der wenigstens einen unbeobachteten Größe basierend auf der Schätzung für die wenigstens eine unbeobachtete Größe bzw. der Schätzung für den Systemzustand.

In einer Ausgestaltung wird die Anomalie der wenigstens einen unbeobachteten Größe erkannt wird, wenn bestimmt wird, dass die Schätzung für die wenigstens eine unbeobachtete Größe um mehr als eine Toleranz von einem bekannten normalen Wert abweicht. Der normale bzw. Normalwert kann z.B. durch Anwenden des Schätzverfahrens während eines Betriebs des maschinellen Systems, in welchem sich dieses in einem bekanntermaßen fehlerfreien Zustand befindet (z.B. in neuem oder gewartetem Zustand bzw. nach einer gewissen Einlaufzeit) bestimmt werden.

In einer Ausgestaltung erfolgen ein wiederholtes Durchführen des iterativen Schätzverfahrens, um eine Zeitreihe von Schätzungen für die wenigstens eine unbeobachtete Größe zu bestimmen, und ein Anwenden der Anomalieerkennung auf die Zeitreihe von Schätzungen für die wenigstens eine unbeobachtete Größe. Dies ermöglicht eine fortlaufende Fehlererkennung. Auch können normale Werte für die unbeobachtete Größe aus der Zeitreihe abgeleitet werden.

In einer Ausgestaltung wird die Anomalie erkannt, wenn Werte der Zeitreihe innerhalb eines späteren Zeitraums um mehr als eine vorgegebene Schwelle von Werten der Zeitreihe innerhalb eines früheren Zeitraums abweichen. Die Schwelle kann z.B. als Absolutwert oder als Prozentwert angegeben sein. Alternativ kann auch eine Varianz oder Standardabweichung für die Werte der Zeitreihe innerhalb des früheren Zeitraums bestimmt werden und die Schwelle in Standardabweichungen angegeben werden, z.B. kann die Schwelle gleich 2, 3, 4 oder 5 Standardabweichungen sein. Der frühere Zeitraum kann so gewählt werden, dass er nach einem Zeitraum liegt, in dem das iterative Schätzverfahren eventuell noch keine genauen Werte liefert (Einschwing- bzw. Lernphase). Der frühere Zeitraum kann eine vorbestimmte zeitliche Länge aufweisen.

In einer Ausgestaltung schließt das Anwenden der Anomalieerkennung ein Bestimmen einer Wertung ein, die einen Gesundheitszustand des maschinellen Systems anzeigt. Insbesondere kann eine Meldung, die insbesondere eine notwendige Wartung anzeigt, erzeugt (und ausgegeben) werden, wenn die Wertung einen vorbestimmten Schwellenwert unterschreitet oder überschreitet. Die Wertung kann etwa entsprechend einer Wertungsskala bestimmt werden, wobei je nach Definition der Wertungsskala geprüft wird, ob der Schwellenwert unterschritten (wenn höhere Wertungen auf der Wertungsskala einem besseren Zustand entsprechen) oder überschritten (wenn niedrigere Wertungen auf der Wertungsskala einem besseren Zustand entsprechen) wird. Die Wertung ermöglicht das Erkennen von relativ geringen Abweichungen im Betrieb des Systems (z.B. durch Verschleiß), ohne dass bereits ein gravierender Fehler (Anomalie) vorliegt.

Eine erfindungsgemäße Recheneinheit, z.B. ein Steuergerät eines hydraulischen Systems, etwa einer hydraulischen Presse, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Figur 1 zeigt eine hydraulische Presse als Beispiel für eine hydraulisch angetriebene Maschine bzw. für eine maschinelles System.

Figur 2 illustriert eine auf einer "virtuellen Sensorik" basierende Fehlererkennung.

Figur 3 zeigt ein Ablaufdiagram gemäß einer möglichen Ausgestaltung des Verfahrens zur Fehlererkennung in einem maschinellen System.

### Detaillierte Beschreibung der Zeichnung

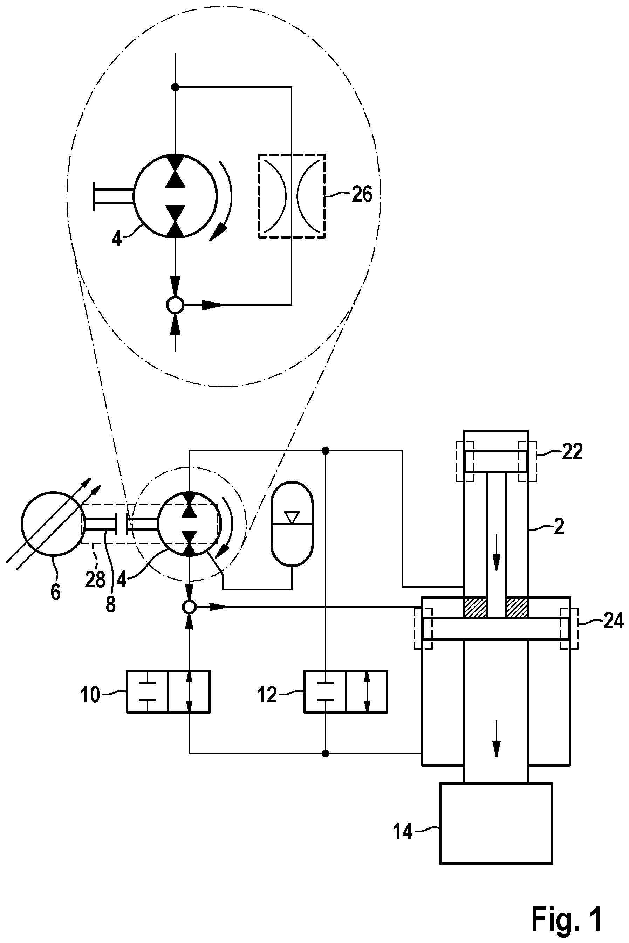

Figur 1 zeigt eine hydraulische Presse als Beispiel für eine hydraulisch angetriebene Maschine bzw. für ein maschinelles System. Die hydraulische Presse weist einen Hydraulikzylinder 2, hier ein Tandemzylinder mit zwei verschieden großen wirksamen Querschnittsflächen, auf, durch den ein mit dem Kolben des Hydraulikzylinders verbundener Stempel 14 bewegt wird. Unter Druck stehendes Druckmittel (d.h. Hydraulikflüssigkeit, typischerweise ein Hydrauliköl) wird durch eine Hydraulikmaschine 4 bzw. Hydraulikpumpe bereitgestellt, die durch einen Motor 6, z.B. einen Elektromotor bzw. eine elektrische Maschine, über eine Welle 8 angetrieben wird. Der Volumenstrom an Druckmittel zu den Kammern des Hydraulikzylinders wird durch Ventile 10, 12 gesteuert. In der dargestellten Situation (Ausfahren) wird etwa während eines Eilgangs ein Volumenstrom in die Kammer des Hydraulikzylinders mit der kleineren wirksamen Querschnittsfläche geleitet, um eine schnelle Zustellbewegung des Stempels vor dem eigentlichen Pressvorgang zu erreichen.

Bei einer möglichst präzisen physikalischen Modellierung dieses Systems bzw. einzelner Größen davon sind neben über Messungen zugänglichen Größen, auch als Messgrößen bezeichnet, z.B. Drücke des Druckmittels, Position und Geschwindigkeit des Kolbens bzw. des Stempels, Drehzahl des Motors bzw. der Hydraulikmaschine, oder Ähnliches, weitere, einer Messung nicht zugängliche Größen zu berücksichtigen, auch als unbeobachtete Größen bezeichnet. Solche nicht unmittelbar messbaren/gemessenen bzw. unbeobachteten Größen sind beispielsweise: die (translatorische) Dämpfung 22, 24 der Kolbenbewegung, die durch Reibung zwischen dem Kolben und der Zylinderwand entsteht; die Reibung 28 (bzw. rotatorische Dämpfung), die an den Lagern der Welle 8, der Hydraulikmaschine 4 und des Motors 6 auftritt; die Leckage 26, die an der Hydraulikmaschine 6 aufgrund des Druckunterschieds zwischen deren Arbeitsanschlüssen auftritt. Zwar kann es prinzipiell möglich sein, diese Größen zu bestimmen, z.B. durch eine geeignete Versuchsreihe, allerdings sind diese Größen während des regulären Betriebs der Maschine im Normalfall nicht messbar bzw. werden zumindest nicht gemessen.

**Beispielsweise** ist in einer präzisen Modellierung der Geschwindigkeit v der Stempel- bzw. Kolbenbewegung in der dargestellten Situation neben den am Hydraulikzylinder durch das Druckmittel bewirkten Druckkräften *F_{pA},F_{pB}* und der auf den Stempel und den Kolben (einschließlich Kolbenstange) wirkenden Schwerkraft *F_{g}* die durch die Dämpfung 22, 24 bewirkte Dämpfungskraft *F_{d}* zu berücksichtigen.

Für die Druckkräfte gilt: *F_{pA} = p_{A}* · *A_{A}*, wobei *p_{A}* der Druck des Druckmittels in einer ersten Kammer des Hydraulikzylinders ist und *A_{A}* die wirksame Querschnittsfläche der ersten Kammer ist, sowie: *F_{pB} = p_{B}* · *A_{B}*, wobei *p_{B}* der Druck des Druckmittels in einer zweiten Kammer des Hydraulikzylinders ist und *A_{B}* die wirksame Querschnittsfläche der zweiten Kammer ist. Für die Schwerkraft gilt: *F_{g}* = m *· g* · sin *α*, wobei m die bewegte Masse ist, g die Gravitationskonstante ist und *α* der Winkel der Achse des Hydraulikzylinders zur Horizontalen ist.

Die Dämpfungskraft wird als durch viskose Reibung bedingte Kraft angenommen, ist also proportional zur Geschwindigkeit: *F_{d}* = *d* · v, wobei der Dämpfungsfaktor d insbesondere von der Viskosität des Druckmittels und der Geometrie der Reibflächen abhängig ist. Der Dämpfungsfaktor (bzw. Reibungsfaktor) ist zumindest im Regelbetrieb des Systems einer Messung bzw. Beobachtung nicht unmittelbar zugänglich.

Daraus ergibt sich die Gesamtkraft als *Fₐ = F_{pA} - F_{pB} + F_{g} - F_{d}* (Druckbeaufschlagung der ersten Kammer entspricht hier einer Druckkraft in Bewegungsrichtung) und die Beschleunigung: *a* = *Fₐ*/*m*. In einer zeitdiskreten Modellierung mit Zeitschritt *τ* ergibt sich entsprechend die Geschwindigkeit zum Zeitpunkt t + *τ* aus der Geschwindigkeit zum Zeitpunkt t als *v(t + τ*) *= v(t) + a*(*t*) · *τ*. Analog kann die Position *x* modelliert werden: *x(t + τ*) *= x(t) + v*(*t*) · *τ*.

Auch kann eine Modellierung des Drucks *p_{A}* in der ersten Kammer erfolgen: *p_{A}*(*t + τ*) *= pₐ*(*t*) *+ ṗ*(*t*) · *τ*. Bei der Bestimmung der Druckänderungsrate *ṗ* ist die Leckage 26 zu berücksichtigen.

Der von der Hydraulikmaschine geförderte Volumenstrom ist *Q_{g} = Q - Q_{L}*, wobei ein Verdrängungsvolumenstrom Q und ein Leckvolumenstrom *Q_{L}* berücksichtigt werden. Der Verdrängungsvolumenstrom ist der durch die Verdrängung bzw. das Schluckvolumen der Hydraulikmaschine gegebene Volumenstrom, d.h.: *Q* = *n* · *V_{g}*, wobei die Verdrängung *V_{g}* das je **Umdrehung** von der Hydraulikmaschine geförderte Volumen ist (z.B. entsprechend einem Schwenkwinkel) und n die Drehzahl ist (Umdrehungen je Zeit).

Der Leckvolumenstrom kann als ${Q}_{L} = L ⋅ \sqrt{{p}_{A}}$ angegeben werden, wobei L ein Leckagefaktor ist, der einer unmittelbaren Messung nicht zugänglich ist. Es ist anzumerken, dass diese Geleichung lediglich die prinzipielle funktionale Abhängigkeit illustrieren soll, etwaige weitere Konstanten sind etwa in L absorbiert bzw. die Einheiten der Größen werden hier nicht genau nachverfolgt (z.B. wird Druck unter der Wurzel typischerweise durch die Dichte des Druckmittels dividiert).

Für die Druckänderungsrate ergibt sich dann: $\dot{p} = \frac{K}{V} {Q}_{g}$. Hier ist *K* die hydraulische Kapazität des Systems und V ist das Volumen, in das der Volumenstrom gefördert wird, d.h. in der gegebenen Situation (Druckmittel wird in die erste Kammer gefördert) durch die Position bzw. Auslenkung des Kolbens und die wirksame Querschnittsfläche der ersten Kammer gegeben: *V = x* · *A_{A}*.

Zwar sind der Dämpfungsfaktor d und der Leckagefaktor L nicht messbar bzw. beobachtbar, sie können jedoch als Größe (Parameter bzw. Variable) eines Systemzustands bzw. als Teil eines Zustandsvektors angesehen werden, der einer Schätzung mittels eines geeigneten Schätzverfahrens zugänglich ist. Insbesondere kann ein iteratives Schätzverfahren, etwa ein Kalman- oder Bayesfilter, angewandt werden. Alternativ bzw. äquivalent ist die Verwendung von iterativen Optimierungsverfahren als Schätzverfahren möglich.

Im obigen Beispiel der Position bzw. Geschwindigkeit des Kolbens bzw. des Stempels kann ein Systemzustand *Xₖ = X*(*tₖ*) bzw. Zustandsvektor zum Zeitpunkt *tₖ = t*₀ *+ k* · *τ* (wobei *k* eine ganze Zahl ist) etwa angegeben werden als (wobei *x*(*tₖ*), *v*(*tₖ*) und *d*(*tₖ*) die Position, die Geschwindigkeit und den Dämpfungsfaktor für den Zeitpunkt *tₖ* stehen): ${X}_{k} = \left(\begin{matrix}x \left({t}_{k}\right) \\ v \left({t}_{k}\right) \\ d \left({t}_{k}\right)\end{matrix}\right)$

Für einen Kalmanfilter kann für die zeitliche Entwicklung des Systems etwa die folgende Zustandsgleichung formuliert werden: ${X}_{k} = {F}_{k} {X}_{k - 1} + {B}_{k} {u}_{k} + {w}_{k}$

Die Matrizen *Fₖ* und *Bₖ* lassen sich aus der physikalischen Modellierung bestimmen, wobei *Bₖuₖ* deterministische Einflüsse auf das System beschreibt (im Beispiel Drücke, Schwerkraft), und *wₖ* zufällige Störungen bzw. zeitlich unkorreliertes Rauschen beschreibt.

Im Beispiel kann der Vektor *uₖ* = *u*(*tₖ*) etwa wie folgt gewählt werden (die Drücke werden etwa gemessen; der Winkel bleibt im Beispiel einer hydraulischen Presse unverändert): ${u}_{k} = \left(\begin{matrix}{p}_{A} \left({t}_{k}\right) \\ {p}_{B} \left({t}_{k}\right) \\ sin α\end{matrix}\right)$

Die Matrizen *Fₖ* und *Bₖ* ergeben sich in einfacher Weise aus den obigen Gleichungen als: ${F}_{k} = τ ⋅ \left(\begin{matrix}0 & 1 & 0 \\ 0 & 1 - \frac{d \left({t}_{k}\right)}{m} & 0 \\ 0 & 0 & 0\end{matrix}\right)$ ${B}_{k} = \frac{τ}{m} ⋅ \left(\begin{matrix}0 & 0 & 0 \\ {A}_{A} & - {A}_{B} & mg \\ 0 & 0 & 0\end{matrix}\right)$

**Unter Verwendung** von Messwerten (Position, Geschwindigkeit, Drücke) für die jeweiligen Zeitpunkte kann eine iterative Schätzung des Zustandsvektors *Xₖ* erfolgen. Entsprechende Verfahren sind dem Fachmann an sich bekannt. Wenn wie oben die Zustandsgleichung nicht linear in den Variablen des Zustandsvektors ist, kann zunächst eine Linearisierung durch Taylorentwicklung erfolgen.

Im Rahmen des iterativen Schätzverfahrens wird auch eine Schätzung für den Dämpfungsfaktor d erhalten, der Teil des Zustandsvektors *Xₖ* ist. Dies ist möglich, da die physikalische Modellierung Terme enthält, die eine Beziehung zwischen gemessenen Größen (Messgrößen) und unbeobachteten Größen herstellen, d.h. das Modell schließt eine Wechselwirkung der unbeobachteten Größe mit Messgrößen ein. Diese Wechselwirkung bzw. Beziehung **kann direkt,** wie z.B. im obigen Beispiel der Dämpfungskraft oder des Leckvolumenstroms sein, könnte aber auch indirekt, über Zwischengrößen, erfolgen.

Dieses Vorgehen kann auch für andere Größen (z.B. den Leckagefaktor) und/oder für andere von der Maschine durchgeführte Prozessschritte (z.B. Einfahren) durchgeführt werden.

Es werden also Schätzwerte für einer Messung nicht zugängliche bzw. unbeobachtete Größen erhalten. Es werden gewissermaßen "virtuelle Sensoren" implementiert. Entsprechende Schätzwerte können auch als "virtuelle Messwerte" bezeichnet werden. Diese virtuellen Messwerte können insbesondere im Rahmen einer Fehlererkennung auch in einer Anomalieerkennung verwendet werden. Die Verwendung virtueller Messwerte (z.B. Dämpfung, Leckage) bei der Fehlererkennung ist zweckmäßig, da sie sich auf Größen beziehen (wenn geeignet gewählt), die von Verschleiß oder Schäden unmittelbar betroffen sind. Es ist also zu erwarten, dass sich daraus ergebende Abweichungen in den virtuellen Messwerten schnell und mit relativ wenig Rechenaufwand erkannt werden können. Gleichzeitig kann auf das wahrscheinlich von einem Fehler betroffene Bauteil rückgeschlossen werden. Beispielsweise könnte eine starke Änderung des Dämpfungsfaktors durch einen beschädigten Dichtungsring im Hydraulikzylinder bedingt sein.

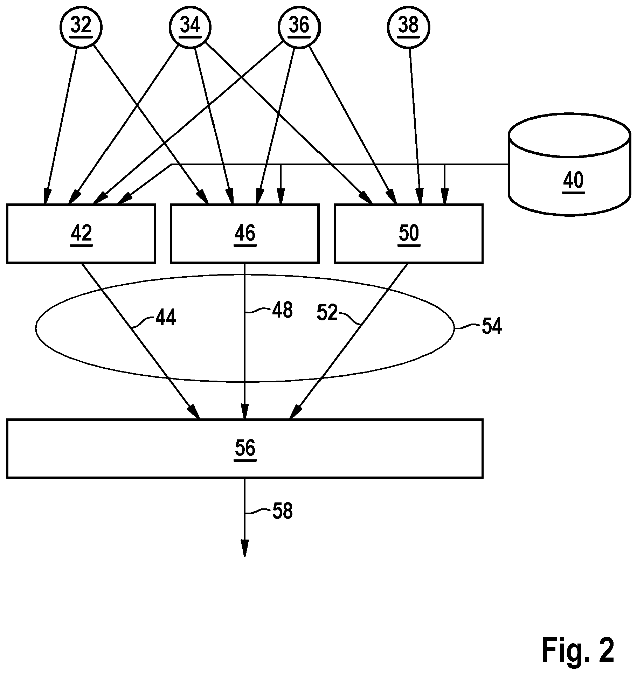

Figur 2 illustriert für das beispielhafte maschinelle System der Figur 1 eine auf einer "virtuellen Sensorik" basierende Fehlererkennung. Dabei werden verschiedene Messwerte erfasst. Bezugnehmend auf Figur 1 sind dies z.B. der mit einem Drucksensor 32 erfasste Druck *p_{A}* in der ersten Kammer, der mit einem Drucksensor 34 erfasste Druck *p_{B}* in der zweiten Kammer, die mit einem Positionssensor 36 erfasste Position x des Kolbens (aus der auch die Geschwindigkeit v abgleitet werden kann), und die mit einem Drehzahlsensor 38 erfasste oder von einer Motorsteuerung ausgegebene Drehzahl n des Motors bzw. der Hydraulikmaschine. Weiterhin sind die Systemeigenschaften 40 bekannt (z.B. wirksame Querschnittsflächen, Winkel, hydraulische Kapazität, ...).

Daraus kann (wie oben beschrieben) z.B. durch eine erste iterative Schätzung, etwa erster Kalmanfilter 42, ein Dämpfungsfaktor 44 bestimmt werden, der sich auf Ausfahrbewegungen bezieht, durch eine zweite iterative Schätzung, etwa zweiter Kalmanfilter 46, ein Dämpfungsfaktor 48 bestimmt werden, der sich auf Einfahrbewegungen bezieht, und durch eine dritte iterative Schätzung, etwa dritter Kalmanfilter 50, ein Leckagefaktor 52 bestimmt werden. Es werden also virtuelle Messwerte bzw. Schätzwerte 54 für nicht-messbare bzw. unbeobachtete Größen bestimmt.

Die erhaltenen Schätzwerte 54 für unbeobachtete Größen können in einer Anomalieerkennung 56 verwendet werden. Etwa können Zeitreihen der Schätzwerte 54 für unbeobachtete Größen analysiert werden, z.B. geprüft werden, ob eine außerhalb einer zulässigen Toleranz liegende Änderung auftritt. Etwa bleiben ohne Schäden der Dämpfungsfaktor und der Leckagefaktor im Wesentlichen konstant, so dass eine relativ starke Änderung ein klarer Hinweis auf einen Fehler ist.

Durch die Anomalieerkennung 56 kann auch eine (Gesamt-)Wertung 58 (Score) bestimmt werden, die eine Gesundheitszustand der Maschine anzeigt. Unterschreitet (oder überschreitet, je nach Definition der Wertung) die Wertung 58 einen vorbestimmten Schwellenwert, kann etwa eine Wartung der Maschine veranlasst werden.

Selbstverständlich können neben den in Figur 2 illustrierten weitere virtuelle Messwerte bzw. Schätzwerte für eine oder mehrere andere unbeobachtete Größen bestimmt werden (etwa für die rotatorische Dämpfung der Motor-/Pumpenwelle) und in die Anomalieerkennung einbezogen werden. Prinzipiell ist das Verfahren skalierbar auf weitere Verlust-/Dämpfungskoeffizienten oder sonstige Änderungen von Systemparametern. Die Dämpfungsparameter und gegebenenfalls anderen Parameter werden dann gemeinsam über multivariate statistische Distanzfunktionen ausgewertet.

Für andere maschinelle Systeme, d.h. von der hydraulischen Presse der Figur 1 verschiedene Systeme, können in analoger Weise andere unbeobachtete Größen, die in eine physikalische Modellierung des jeweiligen Systems eingehen, verwendet werden.

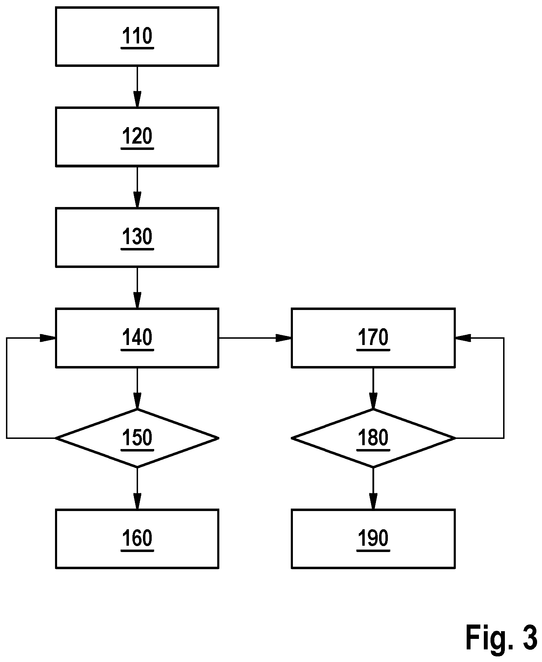

Figur 3 zeigt ein Ablaufdiagram gemäß einer möglichen Ausgestaltung des Verfahrens zur Fehlererkennung in einem maschinellen System.

In Schritt 110 werden Messwerte für Messgrößen des maschinellen Systems erfasst. Dieser Schritt wird typischerweise fortlaufend durchgeführt, wobei zu bestimmten Zeitpunkten bzw. Messzeitpunkten, z.B. regelmäßig beabstandeten Zeitpunkten, Messwerte für die Messgrößen erfasst bzw. gemessen werden. Für verschiedene Messgrößen können die Messzeitpunkte verschieden sein.

In Schritt 120 wird eine Schätzung für einen Systemzustand bzw. Zustandsvektor bestimmt, wobei die Messwerte verwendet werden. Für die Schätzung wird ein iteratives Schätzverfahren implementiert, das auf einem physikalischen Modell basiert. Der Systemzustand schließt eine unbeobachtete Größe ein, die im Rahmen des Modells in Wechselwirkung mit den Messwerten steht. Entsprechend wird eine Schätzung für die unbeobachtete Größe erhalten.

Schritt 120 kann fortlaufend durchgeführt werden, z.B. auf einem Zeitraster in regelmäßigen Zeitschritten. Entsprechend kann in Schritt 130 eine Zeitreihe von Schätzungen für die unbeobachtete Größe gebildet werden.

In Schritt 140 wird eine Anomalieerkennung durchgeführt (z.B. durch Ausführen eines entsprechend programmierten Computerprogramms), die dazu eingerichtet ist, Anomalien bzw. Abweichungen der geschätzten unbeobachteten Größe und/oder, soweit Schritt 130 durchgeführt wird, der Zeitreihe von Schätzungen für die unbeobachtete Größe zu erkennen. Beispielsweise könnte erkannt werden, ob die unbeobachtete Größe bzw. Werte der Zeitreihe um mehr als eine vorbestimmte Toleranz von einem Normalwert der unbeobachteten Größe abweichen. Der Normalwert kann etwa vorbekannt sein und/oder basierend auf Schätzungen für die unbeobachtete Größe für einen Zeitraum, in dem ein bekannt fehlerfreier Betrieb des Systems vorliegt, bestimmt werden. Dazu kann insbesondere die Zeitreihe von Schätzungen für die unbeobachtete Größe verwendet werden.

In Schritt 150 wird geprüft, ob durch die Anomalieerkennung in Schritt 140 eine Anomalie erkannt wurde. Wenn dies nicht der Fall ist, kann mit Schritt 140 fortgefahren werden, d.h. zu Schritt 140 zurückgesprungen werden.

Wenn andererseits eine Anomalie erkannt wurde, wird in Schritt 160 ein Fehler bzw. eine Fehlfunktion des maschinellen Systems erkannt. Es kann dann z.B. eine Fehlermeldung erzeugt und ausgegeben werden und/oder der Betrieb des Systems automatisch gestoppt werden. Die Fehlermeldung kann eine Information über die Anomalie, insbesondere über die unbeobachtete Größe, für die die Anomalie erkannt wurde, einschließen. Falls ein automatisches Stoppen des maschinellen Systems vorgesehen ist, kann dieses abhängig von der Art bzw. Größe der Anomalie ausgelöst werden.

Optional kann in Schritt 170 basierend auf der Anomalieerkennung in Schritt 140 bzw. im Rahmen der Anomalieerkennung in Schritt 140 eine Wertung bestimmt werden, die einen Gesundheitszustand des maschinellen Systems anzeigt. Beispielsweise könnte die Wertung auf einer Wertungsskala von 0 bis 100 bestimmt werden, wobei 100 einem optimalen (Ge-sundheits-)Zustand entspricht, d.h. alle Bauelemente und Funktionen des Systems befinden sich in einem optimalen Zustand bzw. verlaufen optimal. Basierend auf Ergebnissen der Anomalieerkennung kann die Wertung verschlechtert, z.B. um eine gewisse Punktzahl auf der Wertungsskala verringert werden, wenn festgestellt wird, dass noch keine Anomalie besteht, jedoch eine Abweichung der unbeobachteten Größe vorliegt, z.B. Schätzung der unbeobachteten Größe noch innerhalb der Toleranz, aber vom Normalwert abweichend. Die Wertung kann auf Schätzungen für mehrere unbeobachtete Größe basieren.

In Schritt 180 wird geprüft, ob die Wertung einen vorbestimmten Schwellenwert unterschreitet (oder überschreitet, je nach Definition der Wertung bzw. der Wertungsskala). Wenn dies nicht der Fall ist, wird mit dem Bestimmen der Wertung in Schritt 170 fortgefahren.

Wenn die Wertung den Schwellenwert unterschreitet (oder überschreitet), wird in Schritt 190 eine Meldung erzeugt und ausgegeben. Die Meldung kann auf eine notwendige Wartung hinweisen.

## Patentansprüche

1. Verfahren zur Fehlererkennung in einem maschinellen System, umfassend:
- Erfassen (110) von Messwerten für eine oder mehrere Messgrößen des Systems;
- Durchführen (120) eines iterativen Schätzverfahrens (42, 46, 50) unter Verwendung der Messewerte, um eine Schätzung für einen Systemzustand zu bestimmen, der wenigstens eine unbeobachtete Größe (22, 24, 26, 28, 44, 48, 52) des Systems einschließt, wobei das iterative Schätzverfahren auf einem physikalischen Modell des Systems basiert, und wobei das Modell wenigstens eine Wechselwirkung der wenigstens einen unbeobachteten Größe mit der einen oder den mehreren Messgrößen einschließt;
- Anwenden (140) einer Anomalieerkennung, wobei ein Fehler des Systems festgestellt wird (160), wenn eine Anomalie der wenigstens einen unbeobachteten Größe erkannt wird;
**dadurch gekennzeichnet, dass**
das maschinelle System ein hydraulisch angetriebenes System einschließt; wobei die eine oder mehreren Messgrößen eines oder mehrere einschließen von: einer Kolbenposition eines Hydraulikzylinders (2), einer Kolbengeschwindigkeit des Hydraulikzylinders, einem Druck eines Druckmittels, einer Drehzahl einer Hydraulikmaschine (4) oder Hydraulikpumpe; und
wobei die wenigstens eine unbeobachtete Größe eines oder mehreres einschließt von: einem Dämpfungsfaktor (22, 24) für den Kolben des Hydraulikzylinders, einem Leckagefaktor (26) der Hydraulikmaschine oder Hydraulikpumpe, einem Reibungsfaktor (28) eines Lagers der Hydraulikmaschine (4) oder Hydraulikpumpe, eines Motors (6), der die Hydraulikmaschine oder Hydraulikpumpe antreibt, einer Welle, die den Motor mit der Hydraulikmaschine oder Hydraulikpumpe koppelt.

2. Verfahren nach Anspruch 1, wobei die Anomalie der wenigstens einen unbeobachteten Größe erkannt wird, wenn bestimmt wird, dass die Schätzung für die wenigstens eine unbeobachtete Größe um mehr als eine Toleranz von einem bekannten normalen Wert abweicht.

3. Verfahren nach einem der vorstehenden Ansprüche, umfassend:
wiederholtes Durchführen des iterativen Schätzverfahrens, um eine Zeitreihe von Schätzungen für die wenigstens eine unbeobachtete Größe zu bestimmen (130);
Anwenden (140) der Anomalieerkennung auf die Zeitreihe von Schätzungen für die wenigstens eine unbeobachtete Größe.

4. Verfahren nach Anspruch 3, wobei die Anomalie erkannt wird, wenn Werte der Zeitreihe innerhalb eines späteren Zeitraums um mehr als eine vorgegebene Schwelle von Werten der Zeitreihe innerhalb eines früheren Zeitraums abweichen.

5. Verfahren nach einem der vorstehenden Ansprüche, wobei das Anwenden der Anomalieerkennung ein Bestimmen einer Wertung einschließt (170), die einen Gesundheitszustand des maschinellen Systems anzeigt.

6. Verfahren nach Anspruch 5, wobei, wenn die Wertung einen vorbestimmten Schwellenwert unterschreitet oder überschreitet, eine Meldung erzeugt wird (190), die insbesondere eine notwendige Wartung anzeigt.

7. Verfahren nach einem der vorstehenden Ansprüche, wobei die wenigstens eine unbeobachtete Größe (44, 48, 52) eine Größe ist, die im normalen Betrieb des maschinellen Systems nicht messbar ist und/oder nicht gemessen wird.

8. Verfahren nach einem der vorstehenden Ansprüche, wobei der Systemzustand wenigstens eine der einen oder der mehreren Messgrößen einschließt.

9. Verfahren nach einem der vorstehenden Ansprüche, wobei das iterative Schätzverfahren einen Kalmanfilter (42, 46, 50) und/oder einen Bayesfilter einschließt oder als iteratives Optimierungsverfahren implementiert ist.

10. Verfahren nach einem der vorstehenden Ansprüche, wobei durch eine erste iterative Schätzung des iterativen Schätzverfahrens ein erster Dämpfungsfaktor (46) bestimmt wird, der sich auf Ausfahrbewegungen des Hydraulikzylinders bezieht; und/oder durch eine zweite iterative Schätzung des iterativen Schätzverfahrens ein zweiter Dämpfungsfaktor (48) bestimmt wird, der sich auf Einfahrbewegungen des Hydraulikzylinders bezieht; und/oder durch eine dritte iterative Schätzung des iterativen Schätzverfahrens der Leckagefaktor (52) bestimmt wird.

11. Recheneinheit umfassend einen Prozessor, die so konfiguriert ist, dass die das Verfahren nach einem der vorstehenden Ansprüche ausführt.

12. Computerprogramm umfassend Befehle, die bei der Ausführung des Programms durch einen Computer diesen veranlassen, das Verfahren nach Anspruch 1 bis 10 auszuführen.

13. Computerlesbarer Datenträger, auf dem das Computerprogramm nach Anspruch 12 gespeichert ist.

## Claims

1. Method for detecting faults in a machine-based system, comprising:
- capturing (110) measured values for one or more measurement variables of the system;
- performing (120) an iterative estimation method (42, 46, 50) using the measured values in order to determine an estimation for a system state which includes at least one unobserved variable (22, 24, 26, 28, 44, 48, 52) of the system, wherein the iterative estimation method is based on a physical model of the system, and wherein the model includes at least one interaction of the at least one unobserved variable with the one or more measurement variables;
- applying (140) anomaly detection, wherein a fault of the system is identified (160) when an anomaly of the at least one unobserved variable is detected;
**characterized in that**
the machine-based system includes a hydraulically driven system; wherein the one or more measurement variables include one or more of: a piston position of a hydraulic cylinder (2), a piston speed of the hydraulic cylinder, a pressure of a pressure medium, a speed of a hydraulic machine (4) or hydraulic pump; and
wherein the at least one unobserved variable includes one or more of: a damping factor (22, 24) for the piston of the hydraulic cylinder, a leakage factor (26) of the hydraulic machine or hydraulic pump, a friction factor (28) of a bearing of the hydraulic machine (4) or hydraulic pump, of a motor (6) driving the hydraulic machine or hydraulic pump, or of a shaft coupling the motor to the hydraulic machine or hydraulic pump.

2. Method according to Claim 1, wherein the anomaly of the at least one unobserved variable is detected when it is determined that the estimation for the at least one unobserved variable deviates from a known normal value by more than a tolerance.

3. Method according to one of the preceding claims, comprising:
repeatedly performing the iterative estimation method in order to determine (130) a time series of estimations for the at least one unobserved variable;
applying (140) the anomaly detection to the time series of estimations for the at least one unobserved variable.

4. Method according to Claim 3, wherein the anomaly is detected when values of the time series within a later time period deviate by more than a predefined threshold from values of the time series within an earlier time period.

5. Method according to one of the preceding claims, wherein applying the anomaly detection includes (170) determining a score indicating a state of health of the machine-based system.

6. Method according to Claim 5, wherein, if the score falls below or exceeds a predetermined threshold value, a message indicating, in particular, necessary maintenance is generated (190).

7. Method according to one of the preceding claims, wherein the at least one unobserved variable (44, 48, 52) is a variable which is not measurable and/or not measured during normal operation of the machine-based system.

8. Method according to one of the preceding claims, wherein the system state includes at least one of the one or more measurement variables.

9. Method according to one of the preceding claims, wherein the iterative estimation method includes a Kalman filter (42, 46, 50) and/or a Bayesian filter or is implemented as an iterative optimization method.

10. Method according to one of the preceding claims, wherein a first damping factor (46) relating to extension movements of the hydraulic cylinder is determined by a first iterative estimation of the iterative estimation method; and/or a second damping factor (48) relating to retraction movements of the hydraulic cylinder is determined by a second iterative estimation of the iterative estimation method; and/or the leakage factor (52) is determined by a third iterative estimation of the iterative estimation method.

11. Computing unit comprising a processor which is configured such that it performs the method according to one of the preceding claims.

12. Computer program comprising instructions which, when the program is executed by a computer, cause the latter to perform the method according to Claims 1 to 10.

13. Computer-readable data carrier on which the computer program according to Claim 12 is stored.

## Revendications

1. Procédé de détection de défauts dans un système mécanique, comprenant :
- l'acquisition (110) de valeurs de mesure pour une ou plusieurs grandeurs de mesure du système ;
- l'exécution (120) d'une méthode d'estimation itérative (42, 46, 50) en utilisant les valeurs de mesure afin de déterminer une estimation pour un état du système qui comporte au moins une grandeur non observée (22, 24, 26, 28, 44, 48, 52) du système, la méthode d'estimation itérative étant basée sur un modèle physique du système, et le modèle comprenant au moins une interaction de l'au moins une grandeur non observée avec la ou les grandeurs de mesure ;
- l'application (140) d'une détection d'anomalie, un défaut du système étant détecté (160) lorsqu'une anomalie de l'au moins une grandeur non observée est détectée ;
**caractérisé en ce que**
le système mécanique comprend un système à entraînement hydraulique, la ou les grandeurs de mesure comprenant une ou plusieurs parmi : une position de piston d'un vérin hydraulique (2), une vitesse de piston du vérin hydraulique, une pression d'un fluide sous pression, une vitesse d'une machine hydraulique (4) ou d'une pompe hydraulique ; et
l'au moins une grandeur non observée comprenant un ou plusieurs parmi : un facteur d'amortissement (22, 24) pour le piston du vérin hydraulique, un facteur de fuite (26) de la machine hydraulique ou de la pompe hydraulique, un facteur de frottement (28) d'un palier de la machine hydraulique (4) ou de la pompe hydraulique, d'un moteur (6) entraînant la machine hydraulique ou la pompe hydraulique, ou d'un arbre couplant le moteur à la machine hydraulique ou à la pompe hydraulique.

2. Procédé selon la revendication 1, dans lequel l'anomalie de l'au moins une grandeur non observée est détectée lorsqu'il est déterminé que l'estimation pour l'au moins une grandeur non observée s'écarte d'une valeur normale connue de plus d'une tolérance.

3. Procédé selon l'une quelconque des revendications précédentes, comprenant :
l'exécution répétée de la méthode d'estimation itérative afin de déterminer une série temporelle d'estimations pour l'au moins une grandeur non observée (130) ;
l'application (140) de la détection d'anomalie à la série temporelle d'estimations pour l'au moins une grandeur non observée.

4. Procédé selon la revendication 3, dans lequel l'anomalie est détectée lorsque des valeurs de la série temporelle au cours d'une période ultérieure s'écartent de plus d'un seuil prédéterminé de valeurs de la série temporelle au cours d'une période antérieure.

5. Procédé selon l'une quelconque des revendications précédentes, dans lequel l'application de la détection d'anomalie comprend la détermination (170) d'une évaluation indiquant un état de santé du système mécanique.

6. Procédé selon la revendication 5, dans lequel, si l'évaluation devient inférieure ou supérieure à une valeur de seuil prédéterminée, un message est généré (190), lequel indique en particulier une maintenance nécessaire.

7. Procédé selon l'une quelconque des revendications précédentes, dans lequel l'au moins une grandeur non observée (44, 48, 52) est une grandeur qui n'est pas mesurable et/ou n'est pas mesurée pendant le fonctionnement normal du système mécanique.

8. Procédé selon l'une quelconque des revendications précédentes, dans lequel l'état du système comprend au moins l'une de la ou des grandeurs de mesure.

9. Procédé selon l'une quelconque des revendications précédentes, dans lequel la méthode d'estimation itérative comprend un filtre de Kalman (42, 46, 50) et/ou un filtre bayésien ou est mis en œuvre sous la forme d'une méthode d'optimisation itérative.

10. Procédé selon l'une quelconque des revendications précédentes, dans lequel un premier facteur d'amortissement (46) relatif aux mouvements d'extension du vérin hydraulique est déterminé par une première estimation itérative de la méthode d'estimation itérative ; et/ou un deuxième facteur d'amortissement (48) relatif aux mouvements de rétraction du vérin hydraulique est déterminé par une deuxième estimation itérative de la méthode d'estimation itérative ; et/ou le facteur de fuite (52) est déterminé par une troisième estimation itérative de la méthode d'estimation itérative.

11. Unité de calcul comprenant un processeur, laquelle est configurée de manière à mettre en œuvre le procédé selon l'une quelconque des revendications précédentes.

12. Programme informatique comprenant des instructions qui, lors de l'exécution du programme par un ordinateur, amènent celui-ci à mettre en œuvre le procédé selon les revendications 1 à 10.

13. Support de données lisible par ordinateur, sur lequel est stocké le programme informatique selon la revendication 12.
